# EUROPÄISCHE PATENTANMELDUNG

(11) **EP 1 643 359 A1**
(43) Veröffentlichungstag der Anmeldung: **05.04.2006**
(21) Anmeldenummer: 05106716.3
(22) Anmeldetag: 21.07.2005
(51) Int. Cl.: G06F 9/445

(54) **Verfahren zur Freischaltung von Funktionsvarianten**

(30) Priorität: 29.09.2004 DE 102004047079
(71) Anmelder: ROBERT BOSCH GMBH, 70442 Stuttgart (DE)
(72) Erfinder: Freund, Ulrich, 70567 Stuttgart (DE); Burgarolas, Nuria Mata, 70435 Stuttgart (DE); Burst, Alexander, 76229 Karlsruhe (DE)

(57) **Zusammenfassung**

Die Erfindung betrifft ein Verfahren zur Freischaltung von Funktionen (100, 110, 120, 130, 140) einer bestimmten Anwendung, bei dem vorbestimmte Funktionen (100, 110, 120, 130, 140) in einer Hauptfunktion (200) zusammengefasst werden, mögliche Verknüpfungen dieser Funktionen (100, 110, 120, 130, 140) über Variationspunkte (201) festgelegt werden, ausführbarer Programmcode für alle Funktionen erzeugt wird (202) und Funktionen (100, 110, 120, 130, 140) oder deren Verknüpfungen über programmierbare Variationspunkte (201) freigeschalten werden (204). Die Erfindung eignet sich insbesondere zum Testen von Funktionsvarianten in einem Kraftfahrzeug.

## Beschreibung

Die Erfindung betrifft ein Verfahren zur Freischaltung von Funktionsvarianten bzw. Funktionen einer bestimmten Anwendung, bei dem vorbestimmte Funktionsvarianten in einer Hauptfunktion zusammengefasst werden und mögliche Verknüpfungen dieser Funktionsvarianten über Variationspunkte festgelegt werden.

### Stand der Technik

Nachfolgend wird im wesentlichen auf das Testen von Funktionsvarianten im Kraftfahrzeug (Kfz) Bezug genommen, ohne dass das Verfahren auf diese Anwendung beschränkt ist.

Die Kfz-Hersteller bieten in ihren Fahrzeugen eine große Anzahl an unterschiedlichen Ausstattungs- bzw. Funktionsvarianten. Als Ausstattungs- bzw. Funktionsvariante wird dabei die Kombination einzelner Ausstattungen bzw. Funktionen bezeichnet. Ein beträchtlicher Anteil dieser Funktionen ist elektronikbasiert und erfordert zugehörige Software. Dies hat somit eine enorme Anzahl an unterschiedlichen Softwarevarianten, d.h. Kombination unterschiedlicher Software, zur Folge.

Im Regelfall werden nicht alle theoretisch möglichen Funktionsvarianten gleichverteilt vom Kunden nachgefragt. Auch erreicht die Testabdeckung in der Regel keine Gleichverteilung. In der Folge werden weniger häufig nachgefragte Funktionen weniger intensiv getestet, was zu Fehlfunktionen im späteren Betrieb führen kann. Diese Fehlfunktionen sind unerwünscht und sollten vermieden werden.

Physikalische E/E-Architekturen (elektronisch/elektrisch) werden im Kfz für alle möglichen Funktionsvarianten ausgelegt. Das Ergebnis dieser Vorgehensweise wird im Kraftfahrzeugbau als 150% Auto bezeichnet. Hingegen werden die softwarebasierten Funktionsvarianten auf die gängigen Varianten hin optimiert.

In einer Variante nicht benötigter Quell-Programmcode wird über Präprozessor-Definitionen, sogenannte Compiler-Switches, vor der Kompilierung ausgeblendet und ist im ausführbaren Programmcode nicht mehr enthalten. Daher ist es aufwendig, alle möglichen softwarebasierten Funktionsvarianten zu testen.

Es soll ein Verfahren zur Verfügung gestellt werden, das eine einfachere Möglichkeit zum Bereitstellen verschiedener Funktionsvarianten liefert. Vorteilhafte Ausgestaltungen ergeben sich aus den jeweiligen Unteransprüchen und der nachfolgenden Beschreibung.

### Vorteile der Erfindung

Bei dem erfindungsgemäßen Verfahren zur Freischaltung von Funktionen einer bestimmten Anwendung werden vorbestimmte Funktionen in einer Hauptfunktion zusammengefasst, mögliche Verknüpfungen dieser Funktionen über Variationspunkte festgelegt, ausführbarer Programmcode für alle Funktionen erzeugt und Funktionen oder deren Verknüpfungen über programmierbare Variationspunkte freigeschalten. Das Freischalten erfolgt beispielsweise durch Programmieren bzw. Einstellen der programmierbaren Variationspunkte.

In einer bevorzugten Ausführungsform werden alle zu der Anwendung theoretisch möglichen Funktionen in der Hauptfunktion zusammengefasst. Dies ermöglicht die vorteilhafte Erzeugung von ausführbarem Programmcode für alle möglichen Funktionen.

Vorteilhafterweise werden in dem erfindungsgemäßen Verfahren die Funktionen oder deren Verknüpfungen über die programmierbaren Variationspunkte nach einer crisp-Logik freigeschalten. Bei einer Freischaltung nach einer crisp-Logik wird immer nur eine Funktion an einem Variationspunkt freigeschalten.

Ebenso vorteilhaft werden in dem erfindungsgemäßen Verfahren die Funktionen oder deren Verknüpfungen über die programmierbaren Variationspunkte nach einer fuzzy-Logik (z.B. Kennfelder) freigeschalten. Bei einer Freischaltung nach einer fuzzy-Logik werden mehrere Funktionen an einem Variationspunkt in vorbestimmten oder zufälligen Gewichtungsverhältnissen zueinander freigeschalten.

Beide Freischaltungs-Logiken ergeben eine große Anzahl an Funktionsvarianten, was auf einfache Weise eine große Testabdeckung liefert.

In einer bevorzugten Ausgestaltung des Verfahrens wird der ausführbare Programmcode auf Hardware, insbesondere auf Experimentierhardware oder Rapid-Prototyping-Systeme, übertragen und dort die Funktionen oder deren Verknüpfungen über die programmierbaren Variationspunkte freigeschalten. Dies erlaubt die einfache und schnelle Durchführung von Variantentests auf Experimentierhardware.

Vorteilhafterweise werden die Funktionen oder deren Verknüpfungen über die programmierbaren Variationspunkte durch Crossbar-Switches freigeschalten. Der Crossbar-Switch definiert ein Verbindungsschema, das Eingangs- und Ausgangswerte von Funktionen auf einer Experimentierhardware oder einem Rapid-Prototyping-System zur Laufzeit miteinander verbindet. Somit korrespondiert der Crossbar-Switch mit der Gesamtheit der Verbindungen, die zwischen den in der Modellierung enthaltenen Funktionen aufgespannt werden können. Der Crossbar-Switch kann mit einer zweidimensionalen Matrix verglichen werden, bei der beide Dimensionen den Funktionsein- bzw. ausgängen entsprechen und bei der die Matrixwerte definieren, ob die jeweiligen Ein- bzw. ausgänge miteinander verbunden sind.

Besonders bevorzugt ist die Verwendung des erfindungsgemäßen Verfahrens zum Testen von Funktionsvarianten in einem Kraftfahrzeug. Dies erlaubt den schnellen und einfachen Test einer Vielzahl an Funktions- bzw. Ausstattungsvarianten eines Kfz.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand der Ausführungsbeispiele in der Zeichnung schematisch dargestellt und wird im folgenden unter Bezugnahme auf die Zeichnung ausführlich beschrieben.

### Zeichnung

Die Erfindung wird im weiteren anhand den in der Zeichnung dargestellten Figuren näher erläutert.
- Figur 1: zeigt herkömmliche Funktionsvarianten am Beispiel einer Kfz-Scheibenwischersteuerung und
- Figur 2: zeigt eine bevorzugte Ausführungsform des erfindungsgemäßen Verfahrens;

### Beschreibung der Ausführungsbeispiele

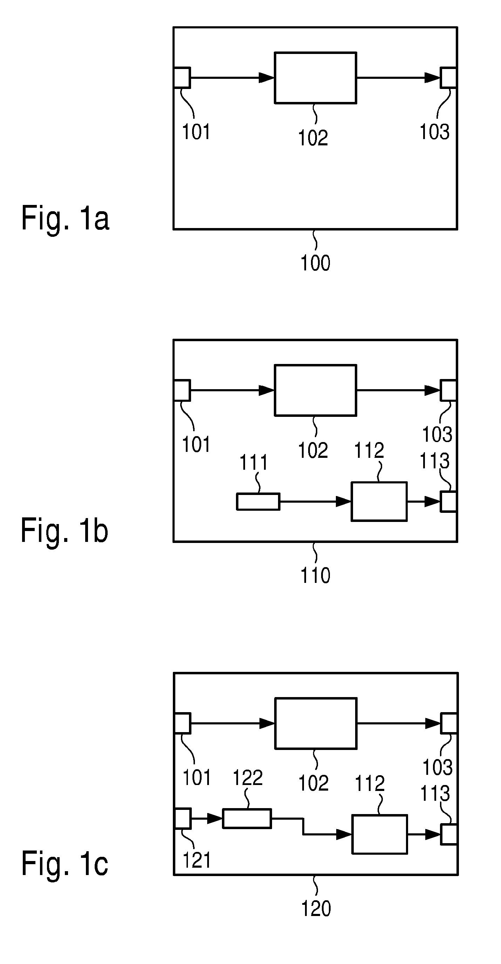

Figur 1a zeigt ein Modell einer herkömmlichen Funktionsvariante einer Kfz-Scheibenwischersteuerung. Es ist ein Steuerungsmodell für die Scheibenwischersteuerung insgesamt mit 100 bezeichnet. Das Steuerungsmodell weist einen Eingang 101 betreffend die Einstellung des Wischerschalters auf, eine Berechnungsfunktion 102 und einen Ausgang 103. Es sei darauf hingewiesen, dass die Berechnungsfunktion 102 keine Funktion im Sinne der Patentansprüche darstellt, sondern ein mathematisches Verfahren.

Abhängig von der Stellung des Wischerschalters berechnet die Berechnungsfunktion 102 die für die zugehörige Bewegung des Scheibenwischer notwendigen Steuerungssignale für den Scheibenwischermotor (nicht gezeigt), die über den Ausgang 103 an den Motor übertragen werden. Diese Variante erlaubt nur die Einstellung einer vorgegebenen Wischergeschwindigkeit über die Schalterstellung.

Figur 1b zeigt ein weiteres Modell 110 einer herkömmlichen Funktionsvariante einer Kfz-Scheibenwischersteuerung. Zusätzlich zu der in Figur 1a dargestellten Funktion ist bei dieser Variante eine Intervallwisch-Funktion hinzugefügt.

Ein vorgegebenes Wischintervall 111 wird an eine Berechnungsfunktion 112 übergeben. Die Berechnungsfunktion 112 berechnet die für die zugehörige Bewegung des Scheibenwischer notwendigen Steuerungssignale, die über einen Ausgang 113 ausgegeben werden.

Figur 1c zeigt das Modell 120 einer weiteren herkömmlichen Funktionsvariante einer Kfz-Scheibenwischersteuerung. Zusätzlich zu der in Figur 1a dargestellten Funktion ist bei dieser Variante eine Intervallwisch-Funktion in Abhängigkeit von der Fahrzeuggeschwindigkeit hinzugefügt. Das Modell 120 weist wiederum die Bestandteile des Modells 100, zusätzlich einen Eingang 121 betreffend die Fahrzeuggeschwindigkeit, eine Berechnungsfunktion 122 und die Berechnungsfunktion 112 auf.

Über den Eingang 121 werden Werte bzw. Signale betreffend die Fahrzeuggeschwindigkeit an die Berechnungsfunktion 122 geliefert. Die Berechnungsfunktion 122 berechnet aus diesen Werten ein zugehöriges Wischintervall, das an die Berechnungsfunktion 112 übergeben wird. Die Berechnungsfunktion 112 berechnet die für die zugehörige Bewegung des Scheibenwischer notwendigen Steuerungssignale, die über den Ausgang 113 ausgegeben werden.

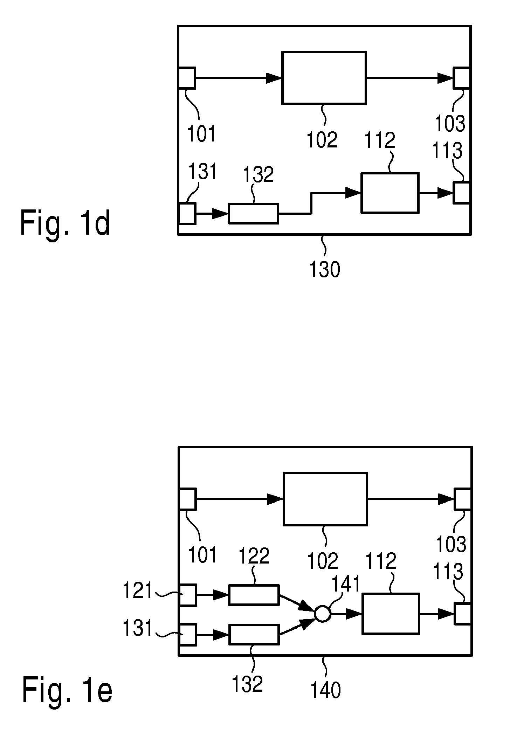

Figur 1d zeigt das Modell 130 einer weiteren herkömmlichen Funktionsvariante einer Kfz-Scheibenwischersteuerung. Zusätzlich zu der in Figur 1a dargestellten Funktion ist bei dieser Variante eine Intervallwisch-Funktion in Abhängigkeit von der Regenstärke bzw. -menge hinzugefügt. Das Modell 130 weist wiederum die Bestandteile des Modells 100, zusätzlich einen Eingang 131 betreffend die Regenmenge pro Zeitintervall, eine Berechnungsfunktion 132 und die Berechnungsfunktion 112 auf.

Über den Eingang 131 werden Werte bzw. Signale betreffend die Regenmenge an die Berechnungsfunktion 132 geliefert. Die Berechnungsfunktion 132 berechnet aus diesen Werten ein zugehöriges Wischintervall, das an die Berechnungsfunktion 112 übergeben wird. Die Berechnungsfunktion 112 berechnet die für die zugehörige Bewegung des Scheibenwischer notwendigen Steuerungssignale, die über den Ausgang 113 ausgegeben werden.

Figur 1e zeigt das Modell 140 einer weiteren herkömmlichen Funktionsvariante einer Kfz-Scheibenwischersteuerung. Dieses Modell kombiniert die Bestandteile der Modelle, die in den Figuren 1c und 1d beschrieben sind. Zusätzlich ist bei dieser Variante eine Merge- bzw. Kombinationsberechnungsfunktion 141 hinzugefügt.

Über den Eingang 131 werden Werte bzw. Signale betreffend die Regenmenge an die Berechnungsfunktion 132 geliefert.

Die Berechnungsfunktion 132 berechnet aus diesen Werten ein zugehöriges Wischintervall, das an die Kombinationsberechnungsfunktion 141 übergeben wird.

Über den Eingang 121 werden Werte bzw. Signale betreffend die Fahrzeuggeschwindigkeit an die Berechnungsfunktion 122 geliefert. Die Berechnungsfunktion 122 berechnet aus diesen Werten ein zugehöriges Wischintervall, das ebenfalls an die Kombinationsberechnungsfunktion 141 übergeben wird.

Die Kombinationsberechnungsfunktion 141 berechnet aus beiden erhaltenen Wischintervallen nach vorbestimmten Rechenregeln ein Kombinationswischintervall, das an die Berechnungsfunktion 112 übergeben wird. Die Berechnungsfunktion 112 berechnet die für die zugehörige Bewegung des Scheibenwischer notwendigen Steuerungssignale, die über den Ausgang 113 ausgegeben werden.

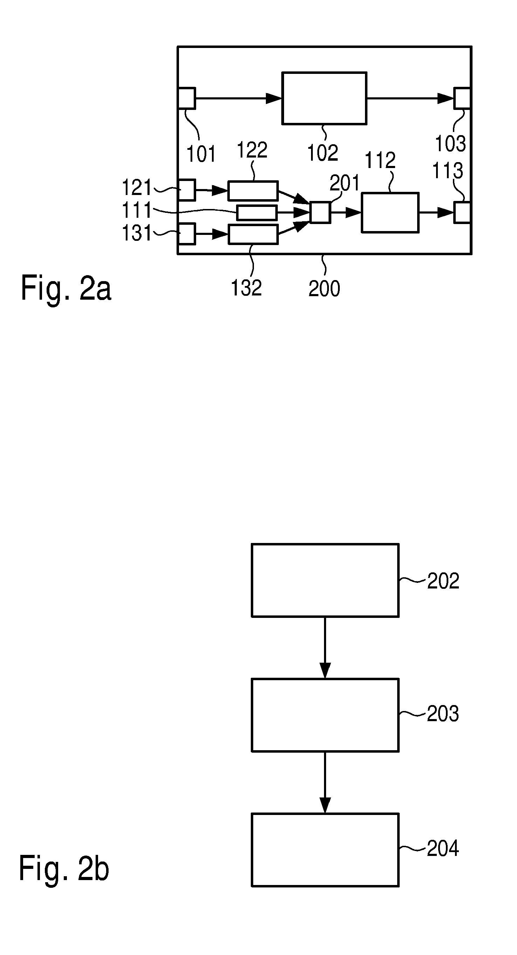

In Figur 2a sind der erste und zweite Verfahrensschritt eines erfindungsgemäßen Verfahrens am Beispiel der oben erläuterten Wischersteuerung schematisch dargestellt. Ein Modell einer Hauptfunktion ist mit 200 bezeichnet. In dieser Hauptfunktion werden alle möglichen Funktionen der oben erläuterten Wischersteuerung zusammengefasst.

Das Modell 200 weist den Eingang 101 betreffend die Einstellung des Wischerschalters, die Berechnungsfunktion 102, den Ausgang 103, das vorgegebene Wischintervall 111, die Berechnungsfunktion 112, den Ausgang 113, den Eingang 121 betreffend die Fahrzeuggeschwindigkeit, die Berechnungsfunktion 122, den Eingang 131 betreffend die Regenmenge pro Zeitintervall, die Berechnungsfunktion 132 auf. Eine mögliche Verknüpfung der Funktionen wird über den programmierbaren Variationspunkt 201 festgelegt.

In Figur 2b sind die weiteren Schritte eines Ausführungsbeispiels eines erfindungsgemäßen Verfahrens als Fortführung des oben erläuterten Beispiels dargestellt. Im dritten Schritt 202 wird aus der definierten Hauptfunktion ausführbarer Programmcode erzeugt. Dieser Programmcode enthält alle vorher definierten Funktionen.

Anschließend wird der ausführbare Programmcode im nächsten Verfahrensschritt 203 auf Experimentierhardware übertragen.

Im Verfahrensschritt 204 schließlich wird auf der Experimentierhardware die gewünschte Funktion durch entsprechendes Einstellen des programmierbaren Variationspunktes freigeschalten.

## Patentansprüche

1. Verfahren zur Freischaltung von Funktionen (100, 110, 120, 130, 140) einer bestimmten Anwendung, bei dem
a) vorbestimmte Funktionen (100, 110, 120, 130, 140) in einer Hauptfunktion (200) zusammengefasst werden,
b) mögliche Verknüpfungen dieser Funktionen (100, 110, 120, 130, 140) über Variationspunkte (201) festgelegt werden,
c) ausführbarer Programmcode für alle Funktionen erzeugt wird (202) und
d) Funktionen (100, 110, 120, 130, 140) oder deren Verknüpfungen über programmierbare Variationspunkte (201) freigeschalten werden (204).

2. Verfahren nach Anspruch 1, **dadurch gekennzeichnet, dass** alle zu der Anwendung theoretisch möglichen Funktionen (100, 110, 120, 130, 140) in der Hauptfunktion (200) zusammengefasst werden.

3. Verfahren nach einem der Ansprüche 1 bis 2, **dadurch gekennzeichnet, dass** die Funktionen (100, 110, 120, 130, 140) oder deren Verknüpfungen über die programmierbaren Variationspunkte (201) nach einer crisp-Logik freigeschalten werden.

4. Verfahren nach einem der Ansprüche 1 bis 2, **dadurch gekennzeichnet, dass** die Funktionen (100, 110, 120, 130, 140) oder deren Verknüpfungen über die programmierbaren Variationspunkte (201) nach einer fuzzy-Logik freigeschalten werden.

5. Verfahren nach einem der vorstehenden Ansprüche, **dadurch gekennzeichnet, dass** der ausführbare Programmcode auf Hardware, insbesondere auf Experimentierhardware oder Rapid-Prototyping-Systeme, übertragen (203) und dort die Funktionen (100, 110, 120, 130, 140) oder deren Verknüpfungen über die programmierbaren Variationspunkte (201) freigeschalten werden (204).

6. Verfahren nach einem der vorstehenden Ansprüche, **dadurch gekennzeichnet, dass** die Funktionen (100, 110, 120, 130, 140) oder deren Verknüpfungen über die programmierbaren Variationspunkte (201) durch Crossbar-Switches freigeschalten werden.

7. Verwendung eines Verfahrens nach einem der vorstehenden Ansprüche zum Testen von Funktionsvarianten (100, 110, 120, 130, 140) in einem Kraftfahrzeug.
